Europäisches Patentamt

**European Patent Office**

**Office européen des brevets**

(19)

(11) Publication number: **0 135 483**

**A1**

(12) # EUROPEAN PATENT APPLICATION

(21) Application number: **84830215.4**

(22) Date of filing: **16.07.84**

(51) Int. Cl.⁴: **H 02 K 15/04**

(30) Priority: **18.07.83 IT 2211183**

(43) Date of publication of application:
**27.03.85 Bulletin 85/13**

(84) Designated Contracting States:
**CH DE FR GB IT LI SE**

(71) Applicant: **EZIO SELVA S.r.l.**
**Via Canova, 23**
**Corsico(IT)**

(72) Inventor: **Selva, Luciano**
**Via Tito Vignoli, 1**
**Milano(IT)**

(74) Representative: **Adorno, Silvano et al,**
**c/o SOCIETA' ITALIANA BREVETTI S.p.A. Via Carducci, 8**
**I-20123 Milano(IT)**

(54) Machine for the automatic shaping of stator and rotor flat-wire windings.

(57) A machine for the automatic shaping of stator and rotor flat-wire coils to be used on rotating electric machines, including a main frame (10, 11) on which two specularly identical platforms, (204, 205) are mounted, one of which (205) is movable with respect to the other taken as a reference. Each of the two platforms is equipped with mounting and torsion grippers (310, 311) to seat the coil (600), these grippers being vertically mobile and rotatable in a vertical plane around a horizontal axis (79, 77) to obtain the desired orientation; two adjustable shaping elements (330, 331) mounted to be positioned with three freedom degrees on the associated supporting element (80, 40) of the respective horizontal axis (79, 77); a coil eyelet clamping device (227) that can move longitudinally and in a vertical plane; and a longitudinally mobile carriage (360) on which a thrusting element (365) is mounted. Furthermore the double pushing ends (366, 366a) of the thrusting element (365) can be independently positioned along a direction perpendicular to the plane defined by the longitudinal and vertical directions of the machine. The machine operation is controlled by a central computer with a video graphic display, governing a plurality of members that are in turn equipped with local microporcessors. The machine is able to shape all kinds of coils, of any difficult shape and of size widely varying may be, it can be programmed very quickly and in a very precise way for any new shape desired, variations and changes concerning the final shape being accomplished in real time, and it is loaded frontally through a safety photocell barrier.

Fig. 8

## "MACHINE FOR THE AUTOMATIC SHAPING OF STATOR AND ROTOR FLAT-WIRE COILS"

This invention regards a fully automatic machine for the shaping of windings or coils made of flat wire and meant to be fitted on rotating electric machines in order to form the rotor and/or stator coils.

It is known that the windings or coils of rotating electric machines are independently shaped and then fitted into appropriate recesses in the stator or the rotor of the electric machine. High-power electric machines generally use great-section flat wire and extremely particular and changeable coil shapes, due to design requirements. More precisely the winding consists of coils where the wires form closed lines that are not in the same plane, but that require, on the contrary, rather complicated bending and shaping the operations in order to be then inserted in correspondingly shaped recesses. Just owing to the great variability of sizes and shapes required for these coils it has been particularly difficult to automate the shaping operations, most of which are still carried out manually with unavoidable problems. In fact, coils so obtained are hardly homogeneous, require difficult operations and frequent manual work, are time-consuming and do not permit an adequate control, since the bending of a portion inevitably affects the shape of other parts of the coil. Therefore nowadays the shape given to the coil is only approximately equal to the desired pattern and this implies other difficulties during the machine assembly operation because of the adjustments required, such as, for instance, by putting the coil into appropriate wooden moulds provided with recesses corresponding to those of the electric machine in order to shape it definitely before the actual assembly.

Machines have also been created that can accomplish such a shaping semi-automatically, in case of particularly simple profile. The main negative aspect of these machines is the limited range of use, taking into account that the longitudinal size of coils can range from less than one meter to over four meters, according to the case.

Another factor leading to lack of precision during the manufacture is the kind of drive (either hydraulic of pneu matic), which brings about some difficulties concerning the control of pressure and of the forces applied to the coil.

Another drawback of these machines is the way of loading and taking out coils: it takes place vertically and requires the use of auxiliary lifting equipments, particularly as for great-size coils, besides being a noteworthy source of danger for the operator, who has to lean over the machine.

Object of this invention is to provide a rotor and stator flat-wire coil shaping machine that can be fully automatic, can be used for coils having very different dimensions and above all can carry out very difficult shaping operations, thus turning out to be fit for practically universal use.

Another object of this invention is to provide a machine of the aforesaid type having an extremely high precision degree by means of stepper motors and drives making use of ball screw and nut systems in engagement with threaded bars. These systems offer a very high transmission efficiency that, together with the reducing effect, allows to use very precise limited-power motors (such as stepper motors).

When necessary, ball systems are used together with packs of cup springs or Belleville washers through which it is possible to determine a value of the pressure applied as a function of the compression stroke chosen (shortening). In this way also a very precise adjustment of the pressure applied can be attained, which would be otherwise impossible, if using the prior hydraulically or pneumatically driven machines. The best performances are obtained from the drive and transmission systems thanks to a multi-microprocessor control system with a centralized computing system (computer with video graphic display), which can control, modify upon the arrival of an outer command signal, optimize and adjust the movement sequence according to the different shapes required.

Another object of this invention is then to provide a machine of the aforesaid type with the characteristic of allowing front loading instead of top loading under the safest conditions. In fact a series of photocells forms a barrier between the machine and the operator, and when this barrier is crossed, the machine stops immediately.

The main feature of the machine according to this invention is to obtain the shape required for each coil with contemporaneous movements, that is to say start and end of the movement of all the axes which are involved in the operation of coil shaping, at speeds that can guarantee operational contemporaneity for different movement strokes and measures through linear, circular and triangular interpolation, in relation with the various sizes of the coil.

These and further features and advantages of the invention will appear from the following detailed description of a preferred, non-limiting embodiment of the machine according to the invention with reference to the accompanying drawings, in which:

FIGURES 1 and 2 show two schematic views, respectively a front view and a plan view of the machine according to the invention;

FIGURE 3 is a schematic side view of the machine (enlarged scale);

FIGURES 4 and 5 show two details of the mounting grippers;

FIGURE 6 Shows a sectional view of the eyelet clamping device and two details of the same device as well;

FIGURE 7 Shows a detail of the carriage with the double pushing member;

FIGURE 8 is a schematic view showing the shaping of a coil; and

FIGURES 9a, 9b show two examples of forming devices for the output angles of the coils to be shaped when coming out of the slots, respectively provided with manual and motor-driven positioning.

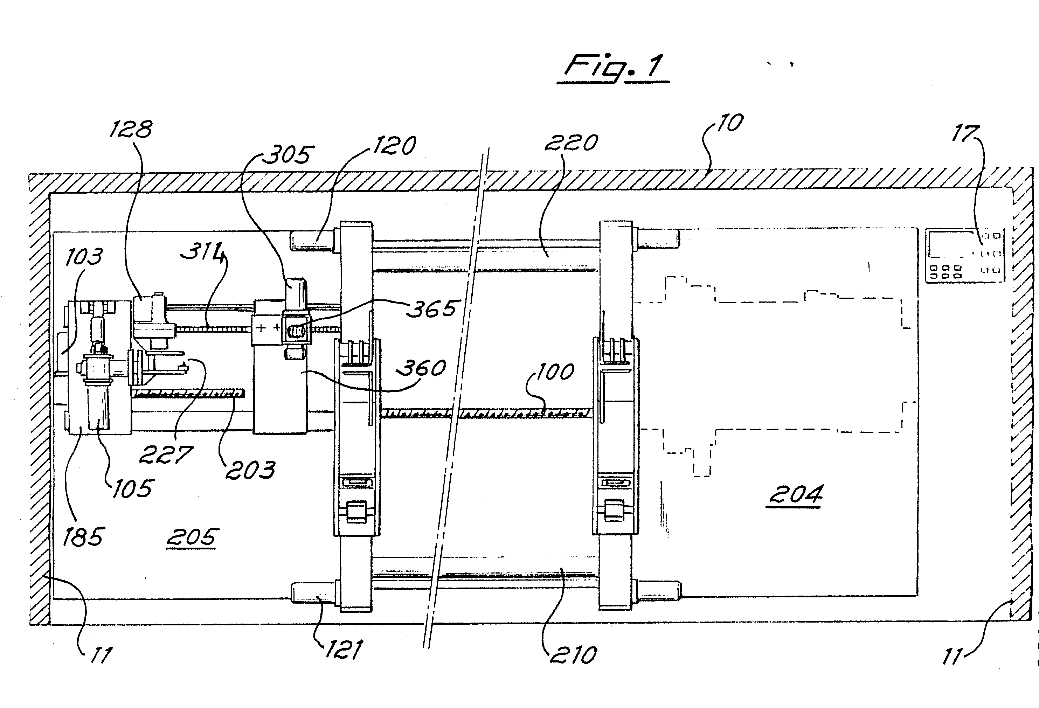

With reference to Figures 1 to 3, the machine according to the invention is built on a main frame comprising vertical columns 11 and crosspieces 10 on which two main, specularly equal platforms (respectively 204 and 205) are mounted. Platform 204 is substantially fixed and forms the longitudinal reference, while platform 205 although is equal to the stationary platform, can move longitudinal ly in order to allow the machine to be adjusted according to the different dimensions of the coils to be shaped.

A central control unit 17 provided with a multiplicity of microprocessors with a centralized computing system and a data display console, control keys, and so on (video graphic display computer) is placed near the fixed platform, while the electric connections required between the stationary portion and the mobile portion are accomplished by means of inner flexible multiple cables, which are not shown for the sake of clearness. More precisely, the control system includes a multiplicity of microprocessors associated with the different mobile parts and controlled by a single programmable central computing unit.

Since the machine structure is fundamentally symmetrical, apart from the fact that platform 205 can move longitudinally, the following description will relate only to the structure of this one. It is obvious that this description applies also to the corresponding parts on platform 204, which have not been numbered for clearness.

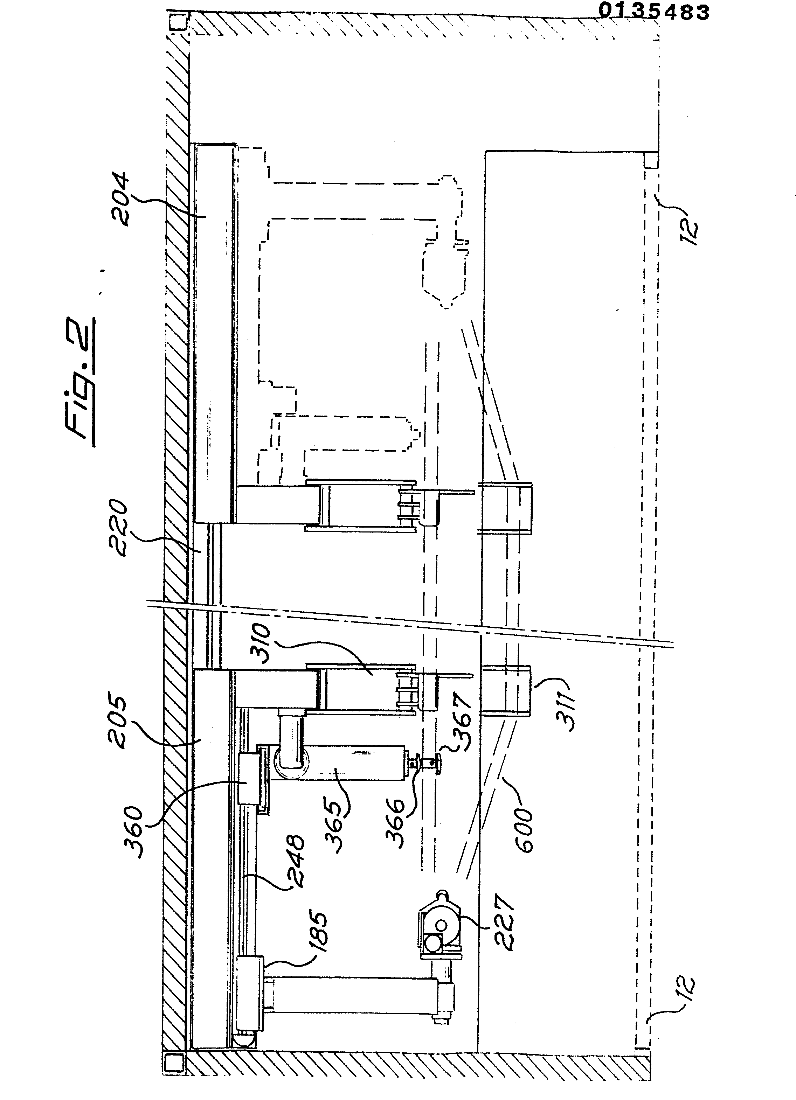

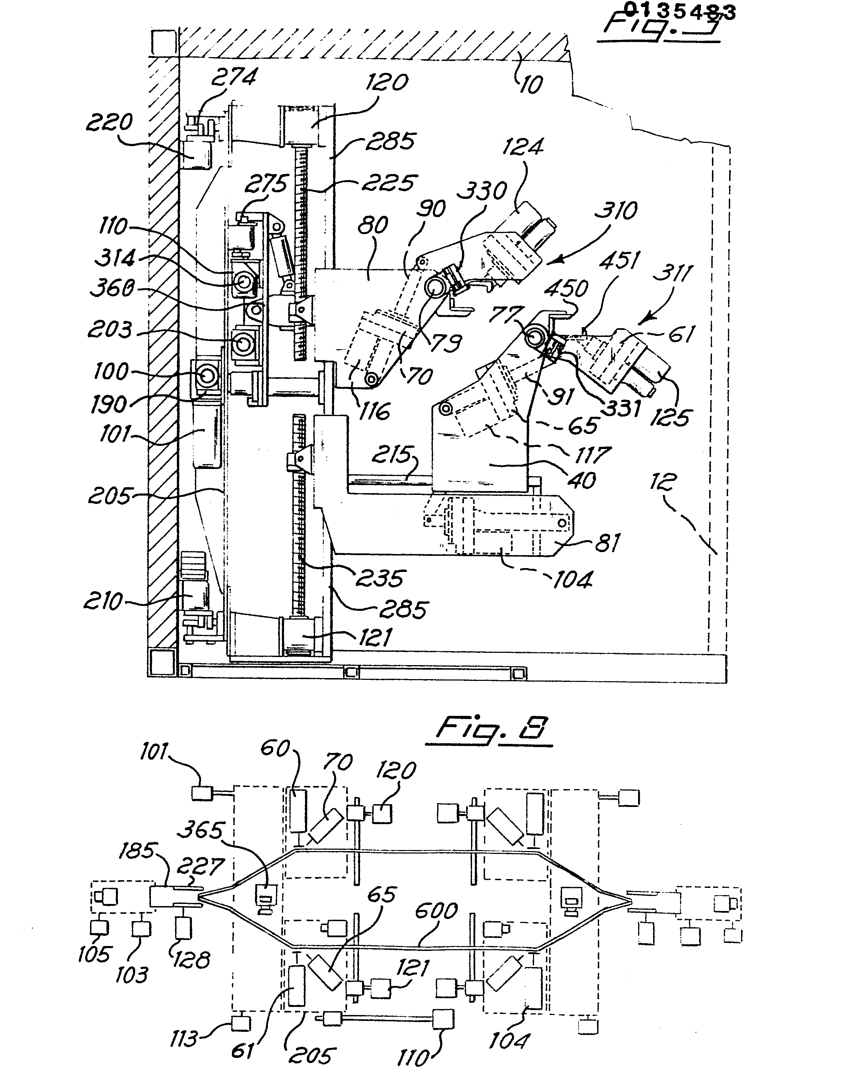

The longitudinal movement of platform 205 along parallel horizontal guides 210 and 220 is controlled through a threaded bar 100 engaging with a ball nut-screw 190 being controlled by a stepper motor 101 (Fig. 3). The positioning of platform 205 determines the centre distance between the outer bendings, i.e. the limit of the straight portion of coil 600 that can be seen in Fig. 2.

As better shown in Fig. 3, each platform is equipped with two mounting grippers, respectively an upper gripper 310 and a lower gripper 311. These grippers are provided with means for causing their local movements, which will be described in detail later. In the vertical plane the grippers are independently movable, by means of threaded bars 225 and 235 engaging with motor-nut screw units 120 and 121, and through a guide bar 285, respectively for the upper and the lower gripper. The vertical movements of the grippers, which are required in order to mount the coil, are accomplished by means of sliding carriages driven by speed reducing stepper motors connected to ball nut-screws.

With reference to Fig. 3, the upper gripper 310 is pivotedly mounted on the bracket 80 vertically sliding along threaded bar 225 and guide bar 285. As shown in the partial section in Fig. 4, a stepper motor 116 is connected to gear 59 of ball nut-screw 51 through a speed reducer 70 and a pinion 58. The rotation of the nut-screw causes the screw 90 to move axially and consequently the upper part of gripper 310 pivoted in 79 to rotate so as to accomplish the required twist of the coil.

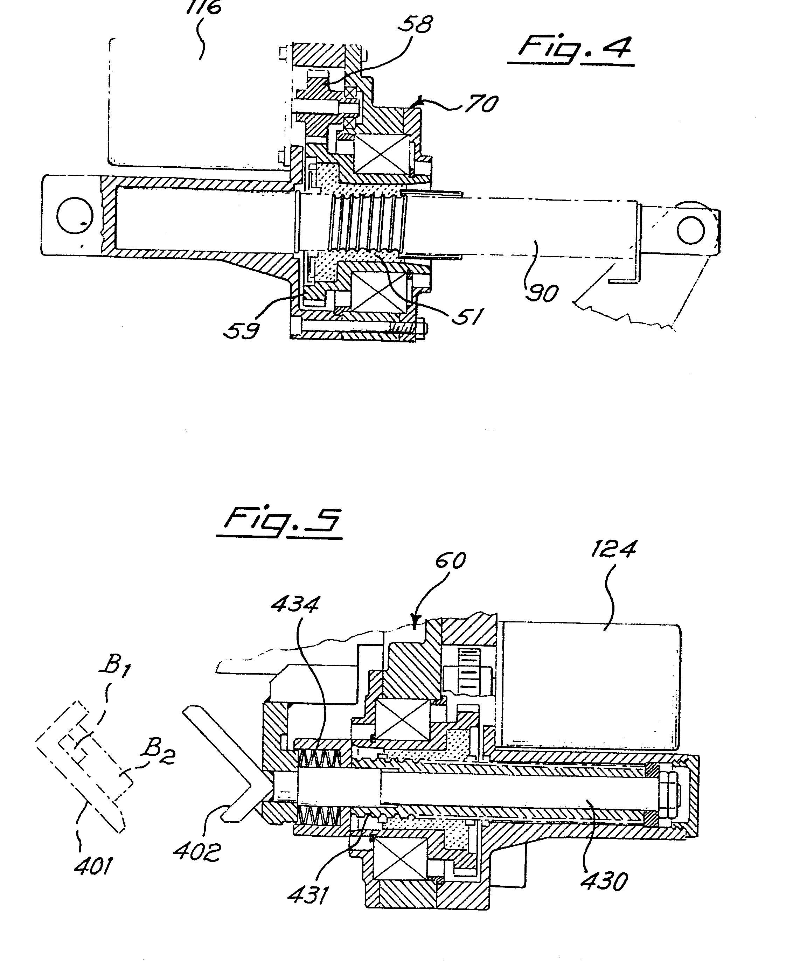

The opening and closing of the upper jaw are controlled by a speed reducer-motor 60 shown more in detail in Fig. 5. The closing movement of jaws 401, 402 is controlled by stepper motor 124, which moves jaw 402 in relationship with jaw 401, which is stationary, through a ball-screw unit 430, 431. Screw 430 is provided with a pack of Belleville washers 434 for adjusting the pressure applied to the flat wires shown as B1 and B2 in Fig. 5. More precisely, the thickness of coils can range from small values (B1) to greater values (B2), but in both cases it is necessary that clamping is carried out in the correct way, which can be attained according to this invention by means of the stepper motor and the springs or washers. In fact these can apply a pressure being a function of the linear compression movement due to screw 430. Thus there is a biunivocal correspondence between the movement of screw 430 (and therefore the rotation of stepper motor 124) and the pressure applied to the coil by the washers. The pressure applied to the coil by the jaws is thus controlled and adjusted by the control system simply by setting a pre-established position or angular rotation of motor 124.

Lower gripper 311 includes a portion 40 (carrying upper jaw 450 and lower jaw 451 connected thereto) which can move along a direction lying in the plane of the drawing in Fig. 3. In fact portion 40 is connected to mobile plate 81 through a screw 83 and a stepper motor-speed reducer unit 104. Lower jaw 451 is pivotedly mounted on the portion 40 (which is integral with upper jaw 450) at point 77 and can be rotated by means of screw 91 of a speed-red ucing motor unit 65 driven by a motor 117 similarly as for unit 70 and upper jaw motor 116. Then a reducer 61 driven by a stepper motor 125 controls the closure of the lower gripper with a pressure adjusting system that is similar to that already described as for the upper gripper.

During shaping operation the coil ends, called eyelets, are clamped and longitudinally controlled through another gripper or clamping device 227, mounted on each mobile platform (only the one relating to platform 205 is shown). The longitudinal positioning of eyelet clamping device 227 occurs through a carriage 185 driven by a stepper motor 103 which operates a ball screw-nut 248. Another stepper motor 105 provides for the transverse positioning (i.e. perpendicularly to the plane of Fig. 1). The opening and closing of the device is/controlled instead by stepper motor-speed reducer 128 provided with a load adjusting device. Fig. 6 shows an enlarged section view of the closure device controlled by stepper motor 128 through ball nut-screw 372 and the pack of washers 373. The device springing system is shown in the detail on one side of Fig. 6 and provides for the swinging of the device.

Under Fig. 6 there is shown one of the two equal, overlapping jaws of the device 227, formed as positionable sectors 351 which can rotate around a vertical axis X-X to form a variable "eyelet clamping" angle and to provide a different clamping area, where the two sectors overlap, according to the shape of the coil. Number 352 indicates a collapsible, swinging, adjustable pin, which can move between a vertical holding position and a horizontal rest position, shown in phantom lines in the drawing and which is suitable to hold the coil to be shaped in the correct position while it is being inserted.

In order to obtain the necessary deformations in a plane substantially perpedicular to the coil plane there is also provided a pushing member 365 on each platform, mounted on a carriage 360 so as to be aligned with the central line of the coil to be shaped along a vertical direction. The carriage can move longitudinally along a threaded bar 314 through a ball screw-nut driven by a stepper motor 110 (Figs. 1, 2, 3). The pushing member is provided with two heads on which hammers or shaping inserts (366, 367) are mounted, which are manually adjustable the upper one (366) being integral with the pusher itself, while the lower one (367) slides along a lower guide 370, parallel to the pusher, which allows to vary the centre distance relating to the two wires of the coil to be shaped.

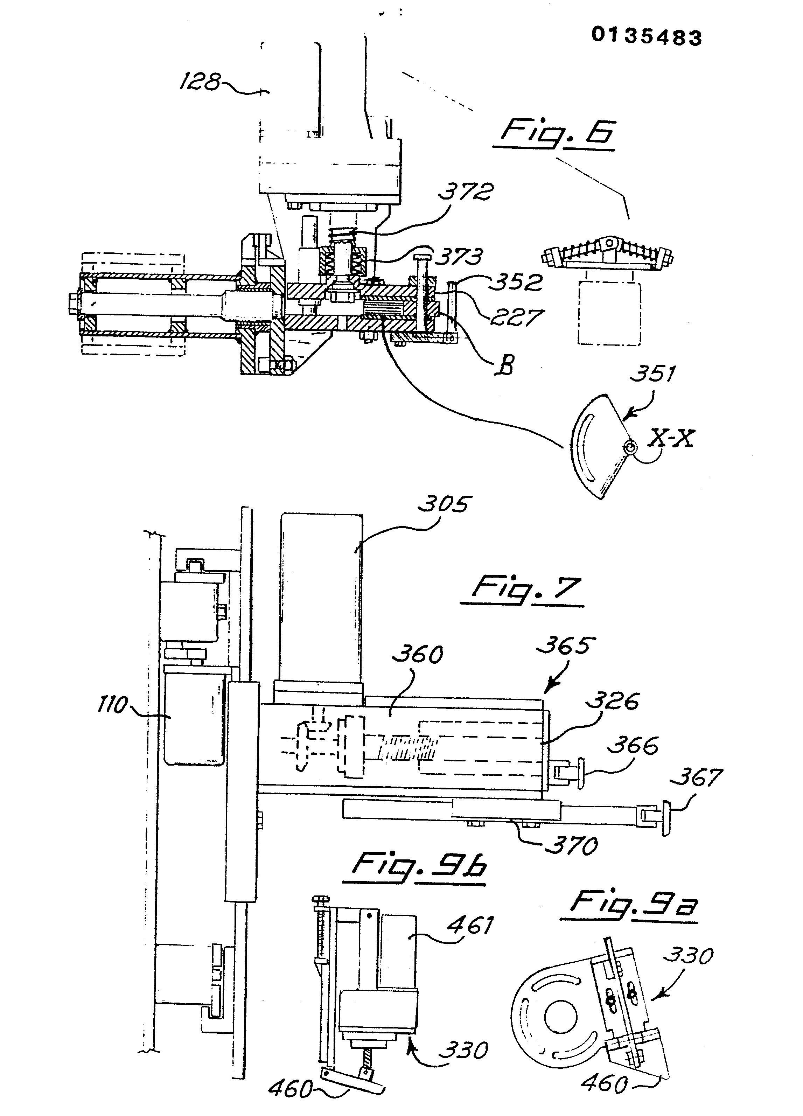

Further movement possibilities in a plane perpendicular to the plane of Fig. 1 are achieved through motor 305 controlling the 326 in Fig. 7.

Fig. 9 shows in detail two embodiments of the correction angular shaping devices (330, 331) shown in Fig. 3. Each of them is equipped with a tool 460 associated with and movable    against the corresponding gripper and suitable to be positioned both manually (Fig. 9a) and with a motor system (Fig. 9b). These shaping devices have the function of determining precisely the output angle of the straight portion of the coil when inserted into the stator with reference to the leg or involution line of the coil itself by interaction with the rotation movement, and they are extremely important elements of the machine according to the invention. They are placed on the supporting bracket 40, 80 of the associated rotating gripper for the straight part of the coil and can carry out three different motions: of angular type, sliding type or a complete shaping movement. Fig. 9a shows manual positioning, while in Fig. 9b the first two movements are manual and the third is effected automatically by means of a speed reducing stepper motor 461, which can be controlled and programmed.

Among side columns 11 there is provided a multiplicity of photocells with their corresponding light elements, schematically shown as 12 in Fig. 3 and placed (horizontally) in a vertical plane corresponding to the side of the machine that is open. It is preferred to use units consisting of a photocell and an associated light source whose rbeam is reflected by a suitable surface on the opposite side of the machine.

These photocell units are connected with a safety system which stops the movement of the machine if their beams are crossed by a foreign body. In this way, as can better be seen in Fig. 2, it is possible to load the coil from the front side, without having to lift it over the machine, in safer working conditions for the operator himself.

In fact he is no longer obliged to lean over the machine as occurred with the prior systems and, should he approach the machine too much while it is working, the photocell barrier would stop it immediately. After this stop, which implies no loss of the stored data, the operation reset is obtained by means of a reset switch placed outside the machine, so that the operation cannot be resumed as long as the operator is near the same.

Preferably the sliding means of platform 205 and of carriage 360 are provided with guide and control surfaces on which replaceable strips of (known) material with a low friction coefficient are applied, as shown for instance in Fig. 3, numeral references 274, 275, or with sliding ball bearing systems.

With reference to the schematic diagram in Fig. 8 there will be given the description of the machine working cycle, also in this case restricted to the left part only, taking into account the symmetrical operation of the right part.

When the machine is back in the stand-by position, with the various elements positioned according to the measures set by the programme and with the grippers open, the operator manually inserts coil 600 placing it onto the seats in mounting grippers 310, 311, already positioned and correctly oriented, while operating collapsible pin 352 of devices 227, which is lifted up to the coil holding position. Upon starting, the machine locks the coil in its straight portion by closing the grippers controlled by the units driven by motors 124 and 125.

At the same time the eyelets are locked through the motor 128, which closes the associate clamping device 227, then through motor 103 the devices 227 move back to a position associated with the initial working measures.

The following operations are carried out contemporaneously and stop at the end of the stroke set and controlled by computer system 17. The widening of the coil is carried out through motors 120 and 121 which separate the straight lengths. The desired coil orientation that is required in order to place blater the coil into the stator or rotor slots, is obtained through units 65 and 70 for rotating the grippers with respect to points 77 and 79. In order to control the coil during its shaping in the correct way, so as to avoid the separation of the turns in the eyelet area and to keep linearity of the involution lines, motor 103 is operated controlling the longitudinal position of devices 227. The transverse movement of the eyelet and of the involution line (or leg) is controlled by motor 105, while contemporaneously motor 103 is approaching the centre in order to balance this movement.

The bending of the involution line is caused by pusher 365, which is actuated before the beginning of the shaping operation, while contemporaneously motor 103 drives eyelet clamping device 227 even nearer to the centre for the compensation required. Then the pusher with its non coplanar elements resets to the position at the start conditions. The springing system shown on one side of Fig. 6 has the function of determining the inclination of the eyelet with respect to the motor axis and can be registered through adjustable stops (not shown).

After shaping, at first the tension on the different parts is released through limited backward movements of the stepper motors (and particularly by completely relieving the gripper compression washer packs). Then both mounting grippers 310, 311 and eyelet clamping devices 227 are released and opened. Thereafter the coil can be manually taken out by the operator, who works under very safe conditions, as he interecepts the photocell beams. Then the machine automatically takes the position required to insert a new coil to be shaped having the same sizes and shape.

The machine is set for any new coil shape by putting therein the theoretical digital data relating to the coil shape desired. Then a sample coil is shaped and the differences against the desired shape are determined so as to correct the programme data taking into account relaxation, copper elasticity, and so on. The definitive data are then permanently stored (in non-volatile memories and the like) so that they can be later recalled, should it be necessary to shape the same coil (or a very similar one) after some time.

This type of adjustment of the machine according to the different shapes of the coil,s starting from the geome trical features previously set as first-approximation data, turns out to be very quick and precise.

The shaping cycle illustrated has to be considered only as an example, since the shape, the size, the shaping and operational sequence can be varied in an extremely easy way and in real time thanks to the machine microprocessor control and to console 17 acting as an interface.

<u>CLAIMS</u>

1. A machine for the automatic shaping of stator and rotor coils formed of a multiplicity of flat wires, to be used on rotating electric machines, characterized by the fact of comprising in combination:

- a main frame (10, 11) on which two specularly identical platforms (204, 205) are mounted, one of which (205) being movable with respect to the other (204) taken as a reference;

each of the platforms including:

a) two mounting and torsion grippers (310, 311) to hold the coil (600), which are movable in a vertical direction and rotatable in a vertical plane around a horizontal axis (79, 77) in order to obtain a desired orientation;

b) a coil eyelet clamping device (227), which can move longitudinally on a vertical plane and transversally and which is provided with a fastening collapsible pin (352);

c) a longitudinally slidable carriage (360) on which a double pushing element (365) is mounted, which is vertically aligned to the centre line of the coil to be shaped and has two pushing ends, one of which is integral with said pushing element (365), these ends being independently positionable in a direction perpendicular to the plane defined by the longitudinal and vertical directions of the machine; and

d) two angular shaping devices (330, 331) mounted to assume different positions with three freedom degrees with respect to supporting brackets (80, 40) of the rotation axes (79, 77) of the two grippers (310, 311).

2. A machine according to claim 1, characterized by the fact that the pushing element (365) is provided at each of said ends with shaping inserts (366, 367) which are interchangeable, positionable and adjustable according to the angle required for the coils and to the distance between the two wires of the coil (600).

3. A machine according to claim 2, characterized by the fact that it includes also a device consisting of photocells and safety horizontal light elements (12) which define a vertical barrier to stop the machine operation as soon as it is crossed by a foreign body, whereby the frontally manual loading of the coil (600) is made possible.

4. A machine according to claim 3, characterized by the fact that the drive systems include stepper motors and ball screw and nut units (51, 83, 90, 91, 248, 326, 372, 431) controlled by a multi-microprocessor system and a central programmed computer, which can be modified in real time through an outer console (17).

5. A machine according to claim 4, characterized by the fact that the said grippers and clamping devices (310, 311, 227) are provided with spring means between the driving elements and the clamping elements to control the pressure applied to the coils.

6. A machine according to claim 5, characterized by the fact that the said spring means consist of Belleville washer packs (434, 373) in which the compression forces are proportional to the linear forward stroke of the ball nut-screws (431, 372) and therefore to the position of the control stepper motor (124, 128).

7. A machine according to claim 6, characterized by the fact that the supporting and sliding surfaces of the movable platform (205) and the carriage (360) are covered
with low friction coefficient material strips (274, 275).

Fig.1

Fig.2

_Fig. 7_

_Fig. 8_

0135483

Fig.4

116
58
70
59
51
90

Fig.5

434
60
124
B₁
B₂
401
402
431
430

0135483

*Fig. 6*

*Fig. 7*

*Fig. 9b*

*Fig. 9a*

## DOCUMENTS CONSIDERED TO BE RELEVANT

| Category | Citation of document with indication. where appropriate, of relevant passages | Relevant to claim | CLASSIFICATION OF THE APPLICATION (Int. Cl. 3) |
|---|---|---|---|
| A | US-A-2 962 076  (M.O. DURHAM)<br>* Complete document * | 1 | H 02 K  15/04 |
| A | US-A-2 841 200  (R.B. JAMES)<br>* Figures 1, 2, 4, 5 * | 1 | |
| A | GB-A-  941 643  (OERLIKON)<br>* Figure 8 * | | |
| A | US-A-2 451 222  (R.B. JAMES) | | |

---

TECHNICAL FIELDS
SEARCHED (Int. Cl. 3)

H 02 K  15/04

The present search report has been drawn up for all claims

| Place of search | Date of completion of the search | Examiner |
|---|---|---|
| BERLIN | 12-10-1984 | FAORO G |